# EUROPEAN PATENT APPLICATION

(11) **EP 4 561 147 A1**
(43) Date of publication of application: **28.05.2025**
(21) Application number: 23842354.5
(22) Date of filing: 19.07.2023
(51) Int. Cl.: H04W 24/02

(54) **INFORMATION PROCESSING METHOD AND APPARATUS, AND READABLE STORAGE MEDIUM**

(30) Priority: 22.07.2022 CN 202210872176
(71) Applicant: Datang Mobile Communications Equipment Co., Ltd., Beijing 100085 (CN)
(72) Inventor: MIAO, Jinhua, Beijing 100085 (CN); YAN, Nan, Beijing 100085 (CN); ZENG, Erlin, Beijing 100085 (CN)
(74) Representative: dompatent von Kreisler Selting Werner - Partnerschaft von Patent- und Rechtsanwälten mbB
(86) International application number: PCT/CN2023/108128
(87) International publication number: WO 2024/017292

(57) **Abstract**

An information processing method, an information processing apparatus and a readable storage medium are provided, which relate to the field of communication technology. The method includes: sending, by a terminal, first information to a network device, where the first information includes information of at least one first RACH feature.

## Description

### CROSS-REFERENCE TO RELATED APPLICATION

The present application claims a priority to the Chinese patent application No. 202210872176.0 filed in China on July 22, 2022, a disclosure of which is incorporated herein by reference in its entirety.

### TECHNICAL FIELD

The present disclosure relates to the field of communications technology, and in particular, to an information processing method, an information processing apparatus, a terminal and a readable storage medium.

### BACKGROUND

In a process of optimizing random access, it introduces different features such as Reduced Capability (RedCap), Small Data Transmission (SDT), Slicing, and Coverage Enhancement (CovEnh, CE). Different features or feature combinations can be associated with corresponding random access resources.

However, a network side configures a Random Access Channel (RACH) for each feature or feature combination, which may not match an RACH configuration that the terminal expects to select.

### SUMMARY

The embodiments of the present disclosure provide an information processing method, an information processing apparatus and a readable storage medium to solve the above technical problems.

In a first aspect, the embodiments of the present disclosure provide an information processing method, including:
sending, by a terminal, first information to a network device, where the first information includes information of at least one first Random Access Channel (RACH) feature.

Optionally, the at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

Optionally, the first RACH feature includes one or more of the followings:
a Small Data Transmission (SDT) feature;
a Coverage Enhancement (CE) feature;
a slice group feature;
a Reduced capability (Red Cap) feature;
a switching feature of a layer 1 (L1) or a layer 2 (L2).

Optionally, the CE feature includes one or more of the followings:
repetition transmission of a random access Message 3 (Msg3);
repetition transmission of a preamble;
repetition transmission of a Physical Uplink Shared Channel (PUSCH);
second information, used to indicate a value of Reference Signal Received Power (RSRP) of a downlink path loss corresponding to random access initialization;
third information, used to indicate a value of the RSRP of the downlink path loss corresponding to random access resource selection;
a comparison result of comparing the second information with a preset threshold;
a difference between the second information and the preset threshold;
a comparison result of comparing the third information with the preset threshold;
a difference between the third information and the preset threshold;
where the preset threshold is used to indicate a threshold value of Msg3 RSRP.

Optionally, information of the switching feature of the L1 or the L2 includes one or more of the followings:
a Beam Failure Detection Reference Signal Set Identifier (BFDRSSetID);
a Control resource Pool Index (CoresetPoolIndex);
a switching completion message for feedback.

Optionally, the switching completion message is fed back through a Medium Access Control (MAC) Control Element (CE), or is fed back through Downlink Control Information (DCI).

Optionally, the first information is sent by the terminal to the network device through one or more of the followings:
a Connection Establishment Failure (CEF) message;
Secondary Cell Group (SCG) failure information;
a Random Access (RA) report.

Optionally, the method further includes:
obtaining, by the terminal, fourth information from the network device, where the fourth information is determined by the network device based on the first information and is used to indicate an RACH configuration;
determining, by the terminal, the RACH configuration that matches the at least one first RACH feature based on the fourth information.

Optionally, the fourth information includes an RACH resource and/or a preset threshold;
the determining, by the terminal, the RACH configuration that matches the at least one first RACH feature based on the fourth information, including:
selecting, by the terminal based on the fourth information, an RACH resource or RACH resource pool corresponding to the at least one RACH feature from the RACH resource included in the fourth information; or
taking, by the terminal, the preset threshold as a target preset threshold, where the preset threshold is used to indicate a threshold value of Msg3 RSRP.

In a second aspect, the embodiments of the present disclosure provide an information processing method, including:
receiving, by a network device, first information sent by a terminal, where the first information includes information of at least one first RACH feature;
sending, by the network device, fourth information to the terminal, where the fourth information is determined by the network device based on the first information and is used to indicate an RACH configuration.

Optionally, the at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

Optionally, the fourth information being determined by the network device, including:
updating, by the network device, an RACH resource or RACH resource pool corresponding to the first RACH feature based on the information of the first RACH feature, and taking, by the network device, information of the RACH resource or RACH resource pool as the fourth information; or
updating, by the network device, a preset threshold based on the information of the first RACH feature, and taking, by the network device, the preset threshold as the fourth information, where the preset threshold is used to indicate a threshold value of Msg3 RSRP.

In a third aspect, embodiments of the present disclosure provide an information processing apparatus, applied to a terminal, including: a memory, a transceiver, and a processor;
the memory is configured to store a computer program; the transceiver is configured to send and receive data under the control of the processor; the processor is configured to read the computer program in the memory to:
send first information to a network device, where the first information includes information of at least one first RACH feature.

Optionally, the processor is further configured to read the computer program in the memory to:
obtain fourth information from the network device, where the fourth information is determined by the network device based on the first information and is used to indicate an RACH configuration;
determine the RACH configuration that matches the at least one first RACH feature based on the fourth information.

Optionally, the first RACH feature includes:
an RACH feature available to the terminal; or
an RACH feature combination available to the terminal; or
an RACH feature used by the terminal to perform a random access process; or
an RACH feature combination used by the terminal to perform a random access process.

Optionally, the first RACH feature includes one or more of the followings:
a SDT feature;
a CE feature;
a slice group feature;
a RedCap feature;
a switching feature of an L1 or an L2.

Optionally, the CE feature includes one or more of the followings:
repetition transmission of an Msg3;
repetition transmission of a preamble;
repetition transmission of a PUSCH;
second information, used to indicate a value of RSRP of a downlink path loss corresponding to random access initialization;
third information, used to indicate a value of the RSRP of the downlink path loss corresponding to random access resource selection;
a comparison result of comparing the second information with a preset threshold;
a difference between the second information and the preset threshold;
a comparison result of comparing the third information with the preset threshold;
a difference between the third information and the preset threshold;
where the preset threshold is used to indicate a threshold value of Msg3 RSRP.

Optionally, information of the switching feature of the L1 or the L2 includes one or more of the followings:
a BFDRSSetID;
a CoresetPoolIndex;
a switching completion message for feedback.

Optionally, the processor is further configured to read the computer program in the memory to:
send the first information to the network device through one or more of the followings:
a CEF;
SCG failure information;
an RA report.

Optionally, the RACH configuration includes an RACH resource and/or a preset threshold; and the processor is further configured to read the computer program in the memory to:
the fourth information includes an RACH resource and/or a preset threshold; and the processor is further configured to read the computer program in the memory to:
select, based on the fourth information, a RACH resource or RACH resource pool corresponding to the at least one first RACH feature from the RACH resource included in the fourth information; or
take the preset threshold as a target preset threshold, where the preset threshold is used to indicate a threshold value of Msg3 RSRP.

In a fourth aspect, embodiments of the present disclosure provide an information processing apparatus, applied to a network device, the apparatus including: a memory, a transceiver, and a processor;
the memory is configured to store a computer program; the transceiver is configured to send and receive data under the control of the processor; the processor is configured to read the computer program in the memory to:
receive first information sent by a terminal, where the first information includes information of at least one first RACH feature;
send fourth information to the terminal, where the fourth information is determined by the network device based on the first information and is used to indicate an RACH configuration.

Optionally, the at least one RACH feature combination includes:
an RACH feature available to the terminal; or
an RACH feature combination available to the terminal; or
an RACH feature used by the terminal to perform a random access process; or
an RACH feature combination used by the terminal to perform a random access process.

Optionally, the processor is configured to read the computer program in the memory to:
update an RACH resource or RACH resource pool corresponding to the first RACH feature based on the information of the first RACH feature, and take information of the RACH resource or RACH resource pool as the fourth information; or
update a preset threshold based on the information of the first RACH feature, and take the preset threshold as the fourth information, where the preset threshold is used to indicate a threshold value of Msg3 RSRP.

In a fifth aspect, embodiments of the present disclosure provide an information processing apparatus, applied to a terminal, the apparatus including:
a sending unit, configured to send first information to a network device, where the first information includes information of at least one first RACH feature.

In a sixth aspect, embodiments of the present disclosure provide an information processing apparatus, applied to a network device, the apparatus including:
a receiving unit, configured to receive first information sent by a terminal, where the first information includes information of at least one first RACH feature;
a sending unit, configured to send fourth information to the terminal, where the fourth information is determined by the network device based on the first information and is used to indicate an RACH configuration.

In a seventh aspect, embodiments of the present disclosure further provide a processor-readable storage medium storing a computer program. When being executed by the processor, the computer program implements the steps of the information processing method as described above.

In the embodiment of the present disclosure, the terminal sends the first information to the network device, and the first information includes information of the first RACH feature, thereby enabling the network device to select a configuration that matches the RACH feature of the terminal based on the first information. Therefore, according to the solutions of the embodiments of the present disclosure, the terminal can select an RACH configuration that better matches the actual needs.

### BRIEF DESCRIPTION OF THE DRAWINGS

Fig. 1 is a flow chart of an information processing method provided by an embodiment of the present disclosure;
Fig. 2 is another flow chart of an information processing method provided by an embodiment of the present disclosure;
Fig. 3 is a structural diagram of an information processing apparatus provided by an embodiment of the present disclosure;
Fig. 4 is another structural diagram of an information processing apparatus provided by an embodiment of the present disclosure;
Fig. 5 is yet another structural diagram of an information processing apparatus provided by an embodiment of the present disclosure;
Fig. 6 is still yet another structural diagram of an information processing apparatus provided by an embodiment of the present disclosure.

### DETAILED DESCRIPTION

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

The embodiments of the present disclosure provide an information processing method and an information processing apparatus, which are used to enable a terminal to select a matching RACH configuration.

The method and the apparatus are based on a same inventive concept, and a principle of the method for solving the problem is similar to that of the apparatus, so the implementation of the apparatus and the method can refer to each other, and repetitions will not be elaborated herein.

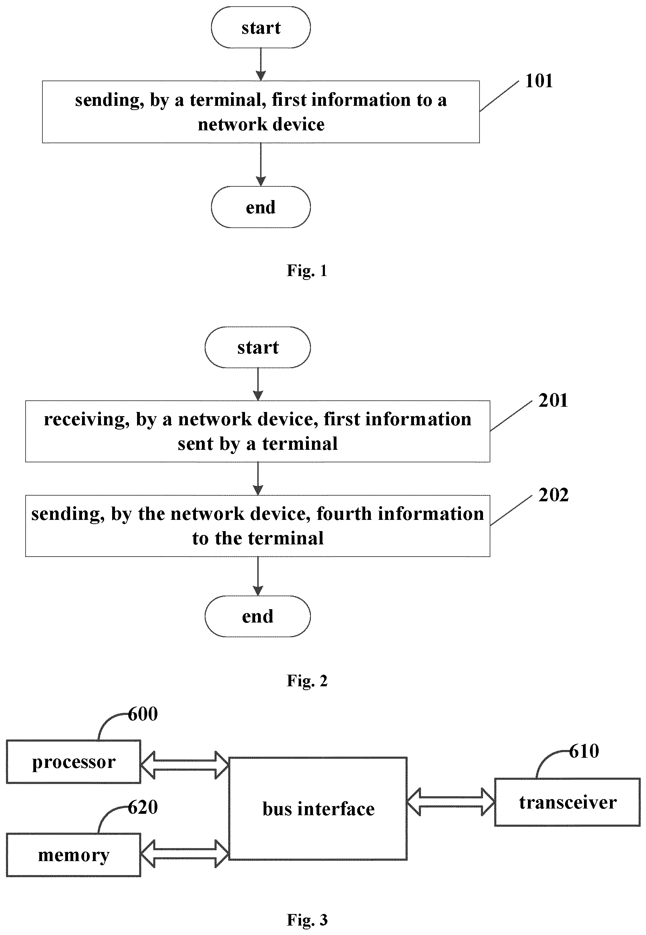

Fig. 1 is a flow chart of an information processing method provided by an embodiment of the present disclosure. As shown in Fig. 1, it includes the following steps.

Step 101: sending, by a terminal, first information to a network device, where the first information includes information of at least one first Random Access Channel (RACH) feature.

In the embodiments of the present disclosure, a role of the first information is to enable the network device to update an RACH configuration, for example, an RACH resource, a preset threshold indicating a threshold value of Msg3 RSRP, etc.

At least one RACH feature includes an RACH feature or a feature combination formed by multiple RACH features. The at least one first RACH feature includes one or more of the followings:
an SDT feature; a CE feature; a slice group feature; a RedCap feature; a switching feature of an L1 or an L2 (L1/L2 mobility).

The CE feature includes any one or more of the followings:
repetition transmission of an Msg3, repetition transmission of a preamble, repetition transmission of a PUSCH; second information, used to indicate a value of Reference Signal Received Power (RSRP) of a downlink path loss corresponding to random access initialization; third information, used to indicate a value of the RSRP of the downlink path loss corresponding to random access resource selection; a comparison result of comparing the second information with a preset threshold; a difference between the second information and the preset threshold; a comparison result of comparing the third information with the preset threshold; a difference between the third information and the preset threshold;
where the preset threshold is used to indicate a threshold value of Msg3 RSRP. The comparison result includes greater than, less than, equal to, etc.

Information of the switching feature of the L1 or the L2 includes one or more of the followings:
a BFDRSSetID; a CoresetPoolIndex; a switching completion message for feedback.

In the embodiments of the present disclosure, the switching completion message is fed back through an MAC CE, or fed back through DCI.

In the embodiments of the present disclosure, the first RACH feature includes: an RACH feature available to the terminal; or an RACH feature combination available to the terminal; or an RACH feature used by the terminal to perform a random access process; or an RACH feature combination used by the terminal to perform a random access process.

The available RACH feature or the available RACH feature combination can also be understood as the RACH feature or the RACH feature combination triggered by the terminal.

For example, the triggered SDT feature: when the SDT service data arrives, an RA-SDT is executed; the triggered CE feature: it is triggered when a current RSRP threshold is lower than a RSRP threshold value configured on the network side; the triggered slice group feature, such as a slice group 1, is triggered when the service of the slice group 1 arrives; the triggered RedCap feature: it is triggered when the terminal is a RedCap terminal.

In the embodiments of the present disclosure, the information of the first RACH feature includes one or more of the followings:
an RACH resource corresponding to the first RACH feature;
priority information of the first RACH feature.

The corresponding RACH resource includes a Random Access Occasion (RO) and preamble information. The priority information may be specific priority information of a certain first RACH feature, or may be the priority relationship between multiple first RACH features, etc.

Optionally, in the embodiments of the present disclosure, the terminal may send the first information to the network device through one or more of the followings:
a CEF; SCG failure information; an RA report.

In the embodiments of the present disclosure, the terminal sends the first information to the network device, and the first information includes information of the first RACH feature, thereby enabling the network device to select a configuration that matches the RACH feature of the terminal based on the first information. Therefore, according to the solution of the embodiments of the present disclosure, the terminal can select an RACH configuration that better matches the actual needs.

Based on the above embodiments, the terminal may also obtain fourth information from the network device, where the fourth information is determined by the network device based on the first information and is used to indicate the RACH configuration. The terminal determines the RACH configuration that matches at least one first RACH feature based on the fourth information.

The fourth information includes an RACH resource and/or a preset threshold, and the preset threshold is used to indicate a threshold value of Msg3 RSRP.

In actual application, the terminal selects an RACH resource or RACH resource pool corresponding to at least one RACH feature from the RACH resource that includes in the fourth information based on the fourth information; or, the terminal uses a preset threshold as a target preset threshold to compare a value of RSRP of a downlink path loss corresponding to random access initialization or a value of the RSRP of the downlink path loss corresponding to random access resource selection with the target preset threshold, thereby determining the information of the CE feature.

Fig. 2 is a flow chart of an information processing method provided by an embodiment of the present disclosure. As shown in Fig. 2, it includes the following steps.

Step 201: receiving, by a network device, first information sent by a terminal, where the first information includes information of at least one first RACH feature.

The first RACH feature is carried through one or more of the followings:
a CEF; SCG failure information; an RA report.

Optionally, at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

The meanings included in the above content may refer to the description of the above embodiments.

Step 202: sending, by the network device, fourth information to the terminal, where the fourth information is determined by the network device based on the first information and is used to indicate an RACH configuration.

In this step, the network device updates the RACH resource or RACH resource pool corresponding to the first RACH feature based on the information of the first RACH feature (such as application information), and takes the information of the RACH resource or RACH resource pool as the fourth information. That is, the information of the updated RACH resource or RACH resource pool is used as the fourth information.

The application information of the first RACH feature may include, for example, the number of times or frequencies that the first RACH feature is used as an available RACH feature, the number of times or frequencies that it is selected for performing a random access process, etc. For example, if a certain RACH feature is used more frequently as an available RACH feature, the network device may allocate more resources to the RACH feature, or reallocate an RACH resource to it.

Alternatively, the network device updates a preset threshold based on information of the first RACH feature, and takes the preset threshold as the fourth information, where the preset threshold is used to indicate a threshold value of Msg3 RSRP

As mentioned above, the application information of the first RACH feature may include, for example, the number of times or frequencies that the first RACH feature is used as an available RACH feature, the number of times or frequencies that the first RACH feature is selected for performing a random access process, etc.

For example, when the terminal does not trigger a random access process of Msg3 repetition, but the RACH failure rate is very high, it means that the preset threshold (rsrp-Threshold Msg3) is set too low, then the network device will increase the rsrp-Threshold Msg3; when the terminal triggers the RACH process of Msg3 repetition, but the network device detects the data transmitted by the terminal with fewer transmissions, it means that the rsrp-Threshold Msg3 is set too high, then the network device will lower the rsrp-Threshold Msg3.

Based on the description of the background portion, it considers that there are various RACH features (RedCap, CE, SDT, slice group), and multiple RACH features can form an RACH feature combination. Due to resource constraints and other reasons (resource constraints can be considered as insufficient resources), the network device cannot perform a reasonable RACH configuration for each RACH feature/RACH feature combination, such as allocating RACH resources, etc. Therefore, when the terminal selects an RACH configuration, the selected RACH configuration may not match the actual RACH feature or RACH feature combination.

In an embodiment of the present disclosure, the terminal may report the available RACH feature/RACH feature combination. The process may include the following steps.

Step 301: the network device configures the RACH resource of the RACH feature/RACH feature combination.

Specifically, the network device sends the RACH resource of the RACH feature/RACH feature combination through a broadcast message. The RACH feature/RACH feature combination may be: a RedCap, a CE, a slice group, an SDT and other RACH features or a feature combination.

The RACH resource may be preamble information or an RO resource, where the RO may include a time domain or frequency domain resource for sending the preamble, or an index number of the time domain/frequency domain resource.

Step 302: the terminal selects the RACH resource based on the available RACH feature.

For example, the terminal triggers an SDT service and the network side configures an SDT parameter, that is, an SDT feature is available, then the terminal can select the RACH resource corresponding to the SDT service from the RACH resource sent in step 301.

For example, the terminal triggers the service of an SDT and a slice group (such as a slice group 1), that is, the SDT feature and the slice group 1 feature are available. However, the network device has not configured the RACH resource for both the SDT and the slice group 1, and has only configured the RACH resource corresponding to the SDT, then the terminal can select the RACH resource of the SDT.

For example, the terminal triggers the service of an SDT and a slice group (such as a slice group 1), that is, the SDT feature and the slice group 1 feature are available. The network device has configured the RACH resource of the SDT and the RACH resource of the slice group 1, but has not configured the RACH resource that are available for both the SDT and the slice group, and if the priority of the SDT feature is higher than the priority of the slice group 1 feature, the terminal can select the RACH resource of the SDT to perform a subsequent RACH process.

Step 303: the terminal successfully completes the random access through a random access process, and records one or more of the following information in an RA report.
(1) Information of the available RACH feature/RACH feature combination.

It assumes that the SDT feature and the slice group 1 feature are available in step 302. At this time, the information of the available RACH feature/RACH feature combination reported by the terminal to the network device is the SDT and the slice group 1.

It assumes that the SDT feature and the slice group 1 feature are available in step 302. The information of the available RACH feature/RACH feature combination reported by the terminal to the network device is the SDT and the slice group 1. It may also include priority information of the RACH feature, for example, the priority of the SDT feature is higher than the priority of the slice group 1 feature, or the terminal reports the RACH resource priority corresponding to the SDT feature and the slice group 1 feature simultaneously.

(2) The terminal reports the RACH feature/RACH feature combination used to actually perform the random access process.

Based on the example in step 302, the terminal actually performs the RACH process with the SDT feature, so the terminal can only report the information of the SDT feature.

Optionally, the terminal may also report the RACH resource corresponding to the RACH feature/RACH feature combination that actually performs the random access process, including the RO and the preamble resource.

Optionally, the terminal reports the priority information of the RACH feature used to actually perform the random access process.

Step 304: the terminal includes indication information that the RA report can be used in an RRC Setup Complete message, and the network device obtains the RA report of the terminal based on the needs.

Step 305: the network device updates the RACH resource based on the content reported by the terminal, so that the terminal has appropriate RACH resource when the corresponding RACH feature/RACH feature combination is triggered.

Optionally, the network device allocates more RACH resources for the RACH feature/RACH feature combination that is triggered more frequently (that is, the number of times it is used as an available RACH feature) based on a time domain and a frequency domain resource; or adds a new RACH resource for the RACH feature.

Step 306: the network device broadcasts the RACH resource to the terminal.

Step 307: the terminal selects the corresponding RACH resource based the RACH feature.

In an embodiment of the present disclosure, the terminal reports the available RACH feature/RACH feature combination. The process may include the following steps.

Step 401: the network device configures the RACH resource of the RACH feature/RACH feature combination.

Specifically, the network device sends the RACH resource of the RACH feature/RACH feature combination through a broadcast message. The RACH feature/RACH feature combination may be: a RedCap, a CE, a slice group, an SDT and other RACH features or a feature combination.

The RACH resource may be preamble information or an RO resource, where the RO may include a time domain or frequency domain resource for sending the preamble, or an index number of the time domain/frequency domain resource.

Step 402: the terminal measures an RSRP threshold value.

When the measured RSRP threshold value is lower than the rsrp-ThresholdMsg3, the terminal determines whether the RACH resource corresponding to the Msg3 repetition can be used to perform random access based on the RACH resource configured by the network device.

Step 403: when it is determined that the RACH resource corresponding to Msg3 repetition can be used to perform random access, the terminal performs the random access process.

Step 404: the terminal successfully completes the random access through the random access process and records one or more of the following information in the RA report:
a value of RSRP of a downlink path loss corresponding to random access initialization;
a value of RSRP of a downlink path loss corresponding to random access resource selection;
a comparison result of comparing a value of RSRP of a downlink path loss with the rsrp-ThresholdMsg3 during random access initialization;
a comparison result of comparing a value of RSRP of a downlink path loss with the rsrp-ThresholdMsg3 during random access resource selection;
a comparison difference between a value of RSRP of a downlink path loss and the rsrp-ThresholdMsg3 during random access initialization;
a comparison difference between a value of RSRP of a downlink path loss and the rsrp-ThresholdMsg3 during random access resource selection.

Step 405: the terminal includes indication information that the RA report can be used in an RRCSetupComplete message, and the network device obtains the RA report of the terminal based on the needs.

Step 406: the network device reasonably divides the Msg3 RSRP threshold (rsrp-ThresholdMsg3) based on the content reported by the terminal.

For example, when the terminal does not trigger a random access process of Msg3 repetition, but the RACH failure rate is very high, it means that the threshold (rsrp-Threshold Msg3) is set too low, then the network device will increase the rsrp-Threshold Msg3; when the terminal triggers the RACH process of Msg3 repetition, but the network device detects the data transmitted by the terminal with fewer transmissions, it means that the rsrp-Threshold Msg3 is set too high, then the network device will lower the rsrp-Threshold Msg3.

Step 407: the network device broadcasts the rsrp-ThresholdMsg3 to the terminal.

Step 408: the terminal performs subsequent random access based on the Msg3 RSRP threshold.

In an embodiment of the present disclosure, the random access process of L1/L2 mobility, namely Contention Free Random Access (CFRA), may include the following steps.

Step 501: the terminal receives L1/L2 switching command and switches to a Transmission-Reception Point (TRP). The terminal performs L1/L2 switching and triggers a random access process, records the RACH feature as the L1/L2 mobility and a corresponding Core set Pool Index.

Step 502: the terminal performs the sending of a random access message 1 (Message 1, MSG1), and prepares to receive a Random Access Response (RAR) message, and records a corresponding random access resource.

Step 503: the terminal successfully receives the RAR message, and feeds back the switching completion message through an MAC CE, and records the indication of the MAC CE feedback switching completion message.

Step 504: after completing the random access process, the terminal feeds back the available information that the random access report can be used to the network device through an uplink message.

Step 505: the network device updates the Core set Pool Index based on the content reported by the terminal.

Step 506: the network device broadcasts the Core set Pool Index to the terminal.

Step 507: the terminal selects the corresponding RACH resource based on the Core set Pool Index.

It can be seen from the above embodiments that, according to the solution of the embodiments of the present disclosure, the network device can update the RACH configuration based on the information reported by the terminal. This enables the network device to accurately obtain the RACH feature/feature combination actually triggered by the terminal, thereby accurately determining the RACH configuration. For the terminal, it can also select a RACH configuration that better matches its actual needs based on the RACH configuration of the network device.

The technical solutions provided by the embodiments of the present disclosure can be applied to a variety of systems, especially 5G systems. For example, the applicable system may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the Evolved Packet System (EPS), and 5G System (5GS), etc.

The terminal device involved in the embodiments of the present disclosure may be a device that provides voice and/or data connectivity to a user, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, a portable, pocket-sized, handheld, computer-built-in or vehicle-mounted mobile device, which exchanges audio and/or data with a radio access network. For example, it may be a Personal Communication Service (PCS) phone, a cordless phone, a Session Initiated Protocol (SIP) phone, a Wireless Local Loop (WLL) station, a Personal Digital Assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells that provide services to the terminal. Depending on the specific application, a base station can also be called an access point, or it can be a device in the access network that communicates with the wireless terminal device through one or more sectors on the air interface, or it can be named by another name. A network device can be used to exchange received air frames with Internet Protocol (IP) packets and act as a router between the wireless terminal device and the rest of the access network, where the rest of the access network can include the IP communications network. The network device may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which is not limited in the embodiments of the present disclosure. In some network structures, the network device may include a Centralized Unit (CU) node and Distributed Unit (DU) nodes, and the centralized units and distributed units may also be arranged geographically separately.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, precoded transmission, beam forming transmission, or the like.

As shown in Fig. 3, the information processing apparatus of the embodiments of the present disclosure is applied to a network device, and the apparatus includes: a memory 620, a transceiver 610, and a processor 600;
the memory 620 is configured to store a computer program; the transceiver 610 is configured to send and receive data under the control of the processor 600; the processor 600 is configured to read the computer program in the memory 620 and perform the following operations:
receiving first information sent by a terminal, where the first information includes information of at least one first RACH feature;
sending fourth information to the terminal, where the fourth information is determined by the network device based on the first information and is used to indicate an RACH configuration.

In Fig. 3, the bus architecture may include any number of interconnected buses and bridges, and connects various circuits including one or more processors represented by the processor 600 and the memory represented by the memory 620. The bus architecture can also link together various other circuits such as peripherals, voltage regulators, and power management circuits, which are all well known in the art and therefore will not be described further herein. The bus interface provides the interface. The transceiver 610 may be a plurality of elements, including a transmitter and a receiver, to allow for communication with various other apparatuses on the transmission medium. The processor 600 is responsible for managing the bus architecture and general processing, and the memory 620 can store data used by the processor 600 when performing operations.

The processor 600 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

The processor 600 is responsible for managing the bus architecture and general processing, and the memory 620 can store data used by the processor 600 when performing operations.

Optionally, the at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

For the explanation and meaning of the first RACH feature can be referred to in the description of the previous method embodiments.

Optionally, the processor 600 is further configured to read the program and perform the following steps:
updating, an RACH resource or RACH resource pool corresponding to the first RACH feature based on the information of the first RACH feature, and taking, information of the RACH resource or RACH resource pool as the fourth information; or
updating, a preset threshold based on the information of the first RACH feature, and taking, the preset threshold as the fourth information, where the preset threshold is used to indicate a threshold value of Msg3 RSRP.

It should be noted here that the above-mentioned apparatus provided by the embodiments of the present disclosure can implement all the method steps implemented by the network device in the above-mentioned method embodiments, and can achieve the same technical effect. The parts and beneficial effects of the embodiments that are the same as the method embodiments will no longer be described in detail.

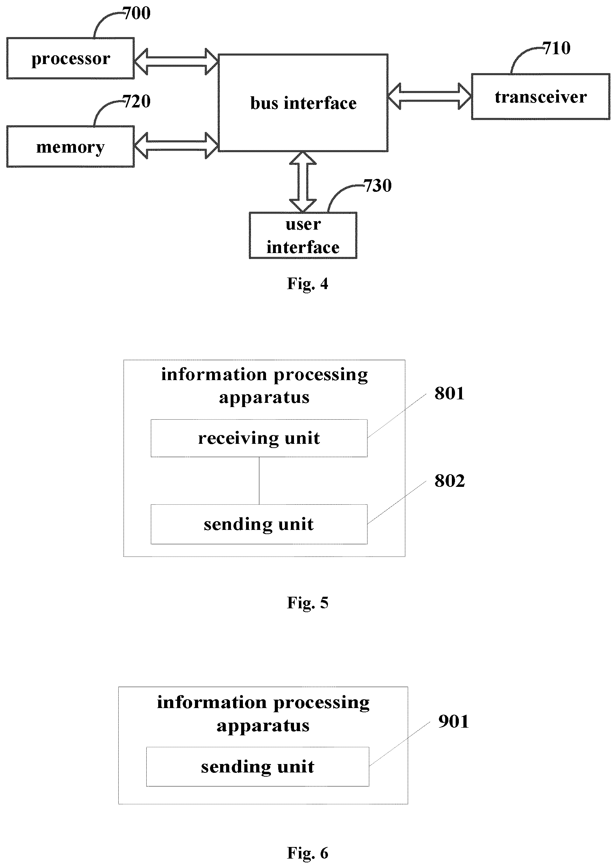

As shown in Fig. 4, the information processing apparatus of the embodiments of the present disclosure is applied to a terminal, and the apparatus includes: a memory 720, a transceiver 710, and a processor 700;
the memory 720 is configured to store a computer program; the transceiver 710 is configured to send and receive data under the control of the processor 700; the processor 700 is configured to read the computer program in the memory 720 and perform the following operations:
sending first information to a network device, where the first information includes information of at least one first RACH feature.

In Fig. 4, the bus architecture may include any number of interconnected buses and bridges, and connects various circuits including one or more processors represented by the processor 700 and the memory represented by the memory 720. The bus architecture can also link together various other circuits such as peripherals, voltage regulators, and power management circuits, which are all well known in the art and therefore will not be described further herein. The bus interface provides the interface. The transceiver 710 may be a plurality of elements, including a transmitter and a receiver, to allow for communication with various other apparatuses on the transmission medium. For different user equipments, the user interface 730 can also be an interface capable of externally or internally connecting a required device. The connected device includes but is not limited to a keypad, a display, a speaker, a microphone, a joystick, etc.

The processor 700 is responsible for managing the bus architecture and general processing, and the memory 720 can store data used by the processor 700 when performing operations.

The processor 700 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

Optionally, the at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

Optionally, the first RACH feature includes one or more of the followings:
an SDT feature;
a CE feature;
a slice group feature;
a RedCap feature;
a switching feature of an L1 or an L2.

Optionally, the CE feature includes one or more of the followings:
repetition transmission of an Msg3;
repetition transmission of a preamble;
repetition transmission of a Physical Uplink Shared Channel (PUSCH);
second information, used to indicate a value of Reference Signal Received Power (RSRP) of a downlink path loss corresponding to random access initialization;
third information, used to indicate a value of the RSRP of the downlink path loss corresponding to random access resource selection;
a comparison result of comparing the second information with a preset threshold;
a difference between the second information and the preset threshold;
a comparison result of comparing the third information with the preset threshold;
a difference between the third information and the preset threshold;
where the preset threshold is used to indicate a threshold value of Msg3 RSRP.

Optionally, information of the switching feature of the L1 or the L2 includes one or more of the followings:
a BFDRSSetID;
a CoresetPoolIndex;
a switching completion message for feedback.

Optionally, the processor 700 is further configured to read the program and perform the following steps:
sending the first information to the network device through one or more of the followings:
a CEF;
Secondary Cell Group (SCG) failure information;
an RA report.

Optionally, the processor 700 is further configured to read the program and perform the following steps:
obtaining, fourth information from the network device, where the fourth information is determined by the network device based on the first information and is used to indicate an RACH configuration;
determining, the RACH configuration that matches the at least one first RACH feature based on the fourth information.

Optionally, the fourth information includes the RACH resource and/or the preset threshold; the processor 700 is further configured to read the computer program in the memory and perform the following operations:
selecting, based on the fourth information, an RACH resource or RACH resource pool corresponding to the at least one RACH feature from the RACH resource included in the fourth information; or
taking, the preset threshold as a target preset threshold, where the preset threshold is used to indicate a threshold value of Msg3 RSRP.

It should be noted here that the above-mentioned apparatus provided by the embodiments of the present disclosure can implement all the method steps implemented by the terminal in the above-mentioned method embodiments, and can achieve the same technical effect. The parts and beneficial effects of the embodiments that are the same as the method embodiments will no longer be described in detail.

As shown in Fig. 5, the information processing apparatus of the embodiments of the present disclosure is applied to a network device, and the apparatus includes:
a receiving unit 801, configured to receive first information sent by a terminal, where the first information includes information of at least one first RACH feature;
a sending unit 802, configured to send fourth information to the terminal, where the fourth information is determined by the network device based on the first information and is used to indicate an RACH configuration.

Optionally, the at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

Optionally, the sending unit determines the fourth information in the following manners:
updating an RACH resource or RACH resource pool corresponding to the first RACH feature based on the information of the first RACH feature, and taking information of the RACH resource or RACH resource pool as the fourth information; or
updating a preset threshold based on the information of the first RACH feature, and taking the preset threshold as the fourth information, where the preset threshold is used to indicate a threshold value of Msg3 RSRP.

It should be noted here that the above-mentioned apparatus provided by the embodiments of the present disclosure can implement all the method steps implemented by the network device in the above-mentioned method embodiments, and can achieve the same technical effect. The parts and beneficial effects of the embodiments that are the same as the method embodiments will no longer be described in detail.

As shown in Fig. 6, the information processing apparatus of the embodiments of the present disclosure is applied to a terminal, and the apparatus includes:
a sending unit 901, configured to send first information to a network device, where the first information includes information of at least one first RACH feature.

Optionally, the at least one first RACH feature includes:
an RACH feature available to the terminal; or
an RACH feature combination available to the terminal; or
an RACH feature used by the terminal to perform a random access process; or
an RACH feature combination used by the terminal to perform a random access process.

Optionally, the first RACH feature includes one or more of the followings:
an SDT feature;
a CE feature;
a slice group feature;
a RedCap feature;
a switching feature of an L1 or an L2.

Optionally, the CE feature includes one or more of the followings:
repetition transmission of a random access Message 3 (Msg3);
repetition transmission of a preamble;
repetition transmission of a Physical Uplink Shared Channel (PUSCH);
second information, used to indicate a value of Reference Signal Received Power (RSRP) of a downlink path loss corresponding to random access initialization;
third information, used to indicate a value of the RSRP of the downlink path loss corresponding to random access resource selection;
a comparison result of comparing the second information with a preset threshold;
a difference between the second information and the preset threshold;
a comparison result of comparing the third information with the preset threshold;
a difference between the third information and the preset threshold;
where the preset threshold is used to indicate a threshold value of Msg3 RSRP.

Optionally, information of the switching feature of the L1 or the L2 includes one or more of the followings:
a BFDRSSetID; a Core set Pool Index; a switching completion message for feedback.

Optionally, the switching completion message is fed back through an MAC CE, or fed back through DCI.

Optionally, the sending unit 901 sends the first information to the network device through one or more of the followings:
a CEF; SCG failure information; an RA report.

Optionally, the RACH configuration includes the RACH resource and/or the preset threshold.

Optionally, the apparatus further includes:
an acquisition unit, configured to obtain fourth information from the network device, where the fourth information is determined by the network device based on the first information and is used to indicate an RACH configuration;
a determination unit, configured to determine the RACH configuration that matches at least one first RACH feature based on the fourth information.

The determination unit is configured to:
select, based on the fourth information, a RACH resource or RACH resource pool corresponding to the at least one first RACH feature from the RACH resource included in the fourth information; or take the preset threshold as a target preset threshold, where the preset threshold is used to indicate a threshold value of Msg3 RSRP.

It should be noted here that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, or the entirety or parts of the technical solution of the present disclosure may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present disclosure. The aforementioned storage medium includes: USB flash disk, removable hard disk, Read-Only Memory (ROM), Random Access Memory (RAM), magnetic disk or optical disc and other media that can store program code.

Embodiments of the present disclosure also provides a processor-readable storage medium, on which a program is stored. When executed by the processor, the program implements the various processes of the above-described information processing method embodiment and can achieve the same technical effects. To avoid redundancy, the details are not repeated herein. The readable storage medium may be any available media or data storage device that the processor can access, including but not limited to magnetic storage (such as floppy disk, hard disk, magnetic tape, Magneto-Optical disk (MO)), optical storage (such as CD, DVD, BD, HVD), and semiconductor memory (such as ROM, EPROM, EEPROM, non-volatile memory (NAND FLASH), Solid State Disk or Solid State Drive (SSD)), etc.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to perform the functions of the modules identified above. The implementation of other modules is similar. In addition, all or part of these modules can be integrated together or implemented independently. The processing element described herein may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processors, DSPs), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

It should be noted that, in the present disclosure, the terms "include", "comprises" or any other variants thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementation, those skilled in the art can clearly understand that the above-mentioned embodiment method can be implemented by means of software plus the necessary general hardware platform, obviously, it can also be implemented by hardware, but in many cases the former is a better implementation. Based on such an understanding, essential parts, or parts contributing to the related art, of the technical solution of the present disclosure may be implemented in a form of a software product. The computer software product is stored in a storage medium (such as ROM/RAM, disk, CD), and includes instructions to cause a terminal (which can be a mobile phone, a computer, a server, an air conditioner or a network device, etc.) to perform the methods described in various embodiments of the present disclosure.

The embodiments of the present disclosure are described above in conjunction with the accompanying drawings, but the present disclosure is not limited to the above-mentioned specific implementations. The above-mentioned specific implementations are merely illustrative and not restrictive. Under the teaching of the present disclosure, those of ordinary skill in the art can also make various forms without departing from the spirit of the present disclosure and the scope of the claims, all of which are within the protection of the present disclosure.

## Claims

1. An information processing method, comprising:
sending, by a terminal, first information to a network device, wherein the first information comprises information of at least one first Random Access Channel (RACH) feature.

2. The method according to claim 1, wherein the at least one first RACH feature comprises:
an RACH feature available to the terminal; or
an RACH feature combination available to the terminal; or
an RACH feature used by the terminal to perform a random access process; or
an RACH feature combination used by the terminal to perform a random access process.

3. The method according to claim 1, wherein the first RACH feature comprises one or more of the followings:
a Small Data Transmission (SDT) feature;
a Coverage Enhancement (CE) feature;
a slice group feature;
a Reduced capability (RedCap) feature;
a switching feature of a layer 1 (L1) or a layer 2 (L2).

4. The method according to claim 3, wherein the CE feature comprise one or more of the followings:
repetition transmission of a random access Message 3 (Msg3);
repetition transmission of a preamble;
repetition transmission of a Physical Uplink Shared Channel (PUSCH);
second information, used to indicate a value of Reference Signal Received Power (RSRP) of a downlink path loss corresponding to random access initialization;
third information, used to indicate a value of the RSRP of the downlink path loss corresponding to random access resource selection;
a comparison result of comparing the second information with a preset threshold;
a difference between the second information and the preset threshold;
a comparison result of comparing the third information with the preset threshold;
a difference between the third information and the preset threshold;
where the preset threshold is used to indicate a threshold value of Msg3 RSRP.

5. The method according to claim 3, wherein information of the switching feature of the L1 or the L2 comprises one or more of the followings:
a Beam Failure Detection Reference Signal Set Identifier (BFDRSSetID);
a Control resource Pool Index (CoresetPoolIndex);
a switching completion message for feedback.

6. The method according to claim 1, wherein the first information is sent by the terminal to the network device through one or more of the followings:
a Connection Establishment Failure (CEF) message;
Secondary Cell Group (SCG) failure information;
a Random Access (RA) report.

7. The method according to claim 1, further comprising:
obtaining, by the terminal, fourth information from the network device, wherein the fourth information is determined by the network device based on the first information and is used to indicate an RACH configuration;
determining, by the terminal, the RACH configuration that matches the at least one first RACH feature based on the fourth information.

8. The method according to claim 7, wherein the fourth information comprises an RACH resource and/or a preset threshold;
the determining, by the terminal, the RACH configuration that matches the at least one first RACH feature based on the fourth information, comprising:
selecting, by the terminal based on the fourth information, an RACH resource or RACH resource pool corresponding to the at least one RACH feature from the RACH resource comprised in the fourth information; or
taking, by the terminal, the preset threshold as a target preset threshold, wherein the preset threshold is used to indicate a threshold value of Msg3 RSRP.

9. An information processing method, comprising:
receiving, by a network device, first information sent by a terminal, wherein the first information comprises information of at least one first RACH feature;
sending, by the network device, fourth information to the terminal, wherein the fourth information is determined by the network device based on the first information and is used to indicate an RACH configuration.

10. The method according to claim 9, wherein the at least one first RACH feature comprises:
an RACH feature available to the terminal; or
an RACH feature combination available to the terminal; or
an RACH feature used by the terminal to perform a random access process; or
an RACH feature combination used by the terminal to perform a random access process.

11. The method according to claim 9 or 10, wherein the fourth information being determined by the network device, comprising:
updating, by the network device, an RACH resource or RACH resource pool corresponding to the first RACH feature based on the information of the first RACH feature, and taking, by the network device, information of the RACH resource or RACH resource pool as the fourth information; or
updating, by the network device, a preset threshold based on the information of the first RACH feature, and taking, by the network device, the preset threshold as the fourth information, wherein the preset threshold is used to indicate a threshold value of Msg3 RSRP.

12. An information processing apparatus, applied to a terminal, the apparatus comprising: a memory, a transceiver, and a processor;
the memory is configured to store a computer program; the transceiver is configured to send and receive data under the control of the processor; the processor is configured to read the computer program in the memory to:
send first information to a network device, wherein the first information comprises information of at least one first RACH feature.

13. The apparatus according to claim 12, wherein the processor is further configured to read the computer program in the memory to:
obtain fourth information from the network device, wherein the fourth information is determined by the network device based on the first information and is used to indicate an RACH configuration;
determine the RACH configuration that matches the at least one first RACH feature based on the fourth information.

14. The apparatus according to claim 12, wherein the first RACH feature comprises:
an RACH feature available to the terminal; or
an RACH feature combination available to the terminal; or
an RACH feature used by the terminal to perform a random access process; or
an RACH feature combination used by the terminal to perform a random access process.

15. The apparatus according to claim 12, wherein the first RACH feature comprises one or more of the followings:
a SDT feature;
a CE feature;
a slice group feature;
a RedCap feature;
a switching feature of an L1 or an L2.

16. The apparatus according to claim 15, wherein the CE feature comprises one or more of the followings:
repetition transmission of an Msg3;
repetition transmission of a preamble;
repetition transmission of a PUSCH;
second information, used to indicate a value of RSRP of a downlink path loss corresponding to random access initialization;
third information, used to indicate a value of the RSRP of the downlink path loss corresponding to random access resource selection;
a comparison result of comparing the second information with a preset threshold;
a difference between the second information and the preset threshold;
a comparison result of comparing the third information with the preset threshold;
a difference between the third information and the preset threshold;
where the preset threshold is used to indicate a threshold value of Msg3 RSRP.

17. The apparatus according to claim 15, wherein information of the switching feature of the L1 or the L2 comprises one or more of the followings:
a BFDRSSetID;
a CoresetPoolIndex;
a switching completion message for feedback.

18. The apparatus according to claim 12, wherein the processor is further configured to read the computer program in the memory to:
send the first information to the network device through one or more of the followings:
a CEF;
SCG failure information;
an RA report.

19. The apparatus according to claim 13, wherein the fourth information comprises an RACH resource and/or a preset threshold; the processor is further configured to read the computer program in the memory to:
select, based on the fourth information, a RACH resource or RACH resource pool corresponding to the at least one first RACH feature from the RACH resource comprised in the fourth information; or
take the preset threshold as a target preset threshold, where the preset threshold is used to indicate a threshold value of Msg3 RSRP.

20. An information processing apparatus, applied to a network device, the apparatus comprising: a memory, a transceiver, and a processor;
the memory is configured to store a computer program; the transceiver is configured to send and receive data under the control of the processor; the processor is configured to read the computer program in the memory to:
receive first information sent by a terminal, wherein the first information comprises information of at least one first RACH feature;
send fourth information to the terminal, wherein the fourth information is determined by the network device based on the first information and is used to indicate an RACH configuration.

21. The apparatus according to claim 20, wherein the at least one RACH feature combination comprises:
an RACH feature available to the terminal; or
an RACH feature combination available to the terminal; or
an RACH feature used by the terminal to perform a random access process; or
an RACH feature combination used by the terminal to perform a random access process.

22. The apparatus according to claim 20 or 21, wherein the processor is configured to read the computer program in the memory to:
update an RACH resource or RACH resource pool corresponding to the first RACH feature based on the information of the first RACH feature, and take information of the RACH resource or RACH resource pool as the fourth information; or
update a preset threshold based on the information of the first RACH feature, and take the preset threshold as the fourth information, wherein the preset threshold is used to indicate a threshold value of Msg3 RSRP.

23. An information processing apparatus, applied to a terminal, the apparatus comprising:
a sending unit, configured to send first information to a network device, wherein the first information comprises information of at least one first RACH feature.

24. An information processing apparatus, applied to a network device, the apparatus comprising:
a receiving unit, configured to receive first information sent by a terminal, wherein the first information comprises information of at least one first RACH feature;
a sending unit, configured to send fourth information to the terminal, wherein the fourth information is determined by the network device based on the first information and is used to indicate an RACH configuration.

25. A processor-readable storage medium storing a computer program, wherein the computer program is used to cause a processor to execute the method according to any one of claims 1 to 11.
